# EUROPEAN PATENT APPLICATION

(11) **EP 2 640 049 A1**
(43) Date of publication of application: **18.09.2013**
(21) Application number: 12290091.3
(22) Date of filing: 16.03.2012
(51) Int. Cl.: H04M 3/533, H04M 1/65

(54) **Method for transmitting a voice mail message in a telecommunications network system, communication terminal device and voice mail server**

(71) Applicant: Alcatel Lucent International, 75009 Paris (FR)
(72) Inventor: Mampaey, Marcel, 1090 Brussels (BE)
(74) Representative: Michalski Hüttermann & Partner Patentanwälte

(57) **Abstract**

The present invention relates to a method for providing voice mail messages within a telecommunication network system (10) by transfering the voice mail as data file. The voice mail message is created locally on a first communication terminal (12) and stored as a data file. The data file is then transmitted to a voice mail server (16) via a packet network or alternatively a circuit switched network. The voice mail message can then be retrieved by the first and/or a second communication terminal device (12, 14) when needed.

The present invention further relates to a corresponding communication terminal device (12, 14) and a corresponding voice mail server (16).

## Description

The present invention relates to a method for providing a voice mail message within a telecommunication network system, especially a wireless telecommunication network system, wherein the voice mail message is created by means of a first communication terminal device and is provided on a voice mail server for retrieval by the first and/or a second communication terminal device. The invention further relates to a corresponding communication terminal device and a corresponding voice mail server.

### BACKGROUND ART

Today with the voicemail service over wireless telecommunication network systems, it happens regularly that the recorded voicemail is of medium to poor quality.

While recording a voicemail over the telecommunication network system on the voice mail server it is impossible for the user of the communication terminal device to verify whether the recording is of acceptable quality or not. The bars indicating signal strength may not help much because they only indicate signal strength and do not reflect eventual congestion in the telecommunication network system, which may affect audio communication quality. Eventually the user may listen to the recording to verify its quality but if the network is again congested, the audio communication quality is poor and the message may replay poorly. Furthermore, the telecommunication network system may still be congested while re-recording, which still does not help. In addition, the entire process becomes lengthy and is not at all user friendly. In fact, very few people use the option to listen to their own message to check it.

This leads to problems for the receiving user who listens to the voice mail message. When the message is played back, it is impossible for the receiving user to determine whether the audio is of poor quality because there is bad radio reception or network congestion, or whether the audio recording itself is of poor quality. Again, the signal strength indication bars will not help much here. If the recording is bad, there is no way to improve it and an important message may be difficult to understand. Hence, the voicemail messaging service on mobile networks regularly fails to fulfill its purpose.

### SUMMARY

There is a strong demand for a solution to overcome the above-mentioned problems.

According to some embodiments of the invention, the method for providing a voice mail message within a telecommunication network system comprises the steps: (a) at least one data file of the voice mail message is created locally in the first communication terminal device and (b) the data file is transmitted by use of packet switched data transmission over the telecommunications network from the first communication terminal device to the voice mail server.

The telecommunication network system especially is a wireless telecommunication network system, wherein the communication terminal devices are mobile communication terminal devices like mobile handsets and smart phones.

The basic idea is to take advantage of the strength of powerful high-end mobile handsets as well as communication terminal devices like smart phones and their ability to establish a Packet Switched (PS) type of communication, to allow them to perform an high definition

(HD) audio recording of a voice mail message locally on the communication terminal device and then send it over a packet switched (PS) communication to an adapted voice mail server. This function requires modifications in the voice mail server such that it is able to establish a minimum dialog with the (mobile) communication terminal devices to enable the service, and later on, to retrieve the data file of the voice mail HD recording over a PS communication and redirect the information to the appropriate user of the corresponding communication terminal device. The computing ability of smart phones, high end mobile phones and other (mobile) communication terminal devices today is sufficient to implement the handset part of this method, and it should be possible to make it available on existing high end handsets via a software update.

Preferably, the data file is created by use of the following steps (i) recording the voice mail locally within the first communication terminal device and (ii) converting the corresponding audio recording into said data file locally within the first communication terminal device.

According to preferred embodiments of the invention, the telecommunications network enables circuit switched (CS) and packet switched (PS) communication links between at least one of the communication terminal devices and the voice mail server. Preferably, the telecommunications network comprises circuit switched (CS) and packet switched (PS) communication links between both mentioned communication terminal devices and the voice mail server. The packet switched data transmission of the data file(s) over the telecommunications network between the communication terminal device(s) and the voice mail server is a transmission of the at least one data file over packet switched (PS) communication links between at least one of the communication terminal devices and the voice mail server.

Another important aspect of the proposed invention is the ability to remain backward compatible with older communication terminal devices (both calling user of the first communication terminal devices and called user of the second communication terminal devices) and the ability to remain backward compatible with older voice mail servers as well.

Therefore, according to other preferred embodiments of the present invention, the first communication terminal device and the voice mail server check whether the respective other device (the voice mail server and the first communication terminal device respectively) is set up for a transmission of the voice mail via packet switched data transmission. Said check is performed by comparing their characteristics via data exchange (a communication) prior the creation of the at least one data file. Preferably, this comparison of said characteristics is performed by data exchange via the circuit switched (CS) communication link, especially by means of DTMF tones (DTMF: Dual-tone multi-frequency signaling).

According to yet another preferred embodiment of the present invention, the communication terminal device retrieves the voice mail message from the voice mail server by transmission of the data file from the voice mail server to the communication terminal device by use of packet switched data (PS) transmission over the telecommunications network system.

Preferably, the voice mail server and the communication terminal device check whether the server and the terminal device are set up for a transmission of the at least one data file via packet switched data transmission, wherein the check is performed by comparing their characteristics via data exchange prior the retrieval of the at least one data file. Said check is performed by comparing their characteristics via data exchange prior the creation of the at least one data file. Preferably, this comparison of said characteristics is performed by data exchange via the circuit switched (CS) communication link, especially by means of DTMF tones (DTMF: Dual-tone multi-frequency signaling).

In the event that one of the terminal and the server is not set up for a transmission of the voice mail message via packet switched data transmission, the communication terminal device retrieves the voice mail message from the voice mail server by means of (ordinary) circuit switched CS data transmission.

According to some embodiments of the invention, the communication terminal device for creating a voice mail message, which can be provided on a voice mail server, is arranged for (a) creating at least one data file of the voice mail message locally in the first communication terminal device and for (b) transmitting the at least one data file by use of packet switched data transmission over the telecommunications network to the voice mail server. The communication terminal device preferably is a communication terminal device arranged for performing the above-mentioned method.

According to preferred embodiments of the invention, the communication terminal device is arranged for receiving and providing the voice mail message in terms of at least one data file transmitted by use of packet switched data transmission over the telecommunications network.

According to other preferred embodiments of the invention, the communication terminal device is arranged for checking whether the voice mail server is set up for a sending and/or receiving of the voice mail message via packet switched data transmission.

According to other preferred embodiments of the present invention, the voice mail server for receiving voice mail messages from communication terminal devices and for providing voice mail messages to communication terminal devices in a telecommunication network system is arranged for receiving and providing the voice mail message in terms of at least one data file transmitted by use of packet switched data transmission over the telecommunications network. The voice mail server preferably is a voice mail server arranged for performing the above-mentioned method.

According to other embodiments of the invention, the voice mail server is arranged for checking whether the communication terminal devices is set up for a transmission of the at least one data file via packet switched PS data transmission.

These and other aspects of the invention will be apparent from and elucidated with reference to the embodiment described hereinafter.

### BRIEF DESCRIPTION OF THE DRAWINGS

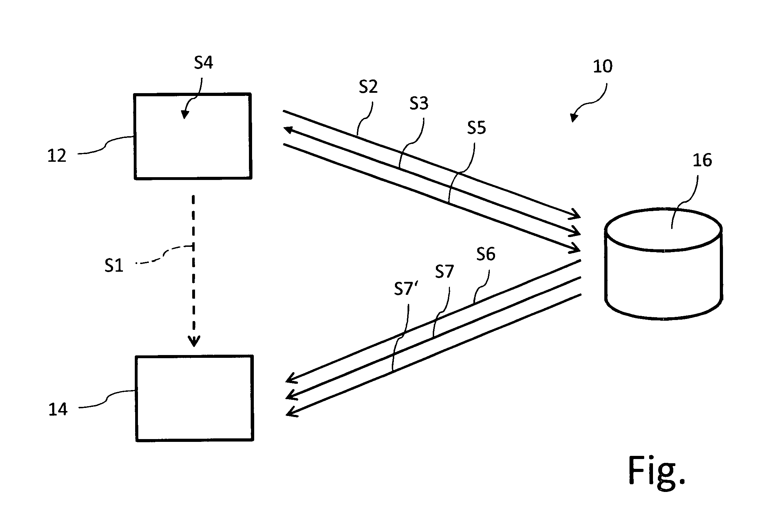

The Figure is an exemplary schematic representation of a telecommunication network system according to some embodiments of the invention.

### DETAILED DESCRIPTION

The Figure shows an exemplary schematic representation of a telecommunication network system 10. The system 10 comprises a first communication terminal device 12, a second communication terminal device 14 and a voice mail server 16. All these devices 12, 14, 16 are interconnected by circuit switched (CS) and packet switched (PS) communication links within the network system 10.

The communication terminal devices 12, 14 are devices for creating and receiving a voice mail message, which message can be provided on the voice mail server 16. At least the first communication terminal device 12 is arranged for creating at least one data file of the voice mail message locally in the first communication terminal device 12. Further on, both communication terminal devices 12, 14 are arranged for transmitting the at least one data file to the voice mail server 16 and receiving such data file(s) from the voice mail server 16 by use of packet switched data transmission over the telecommunications network 10.

The voice mail server 16 is arranged for receiving, storing and providing the voice mail message in terms of at least one data file transmitted by use of packet switched data transmission over the telecommunications network 10. Further, the voice mail server is arranged for storing the voice mail message.

In a preferred embodiment, the method for providing a voice mail message within a telecommunication network system 10 works as follows:
A first user calls the second communication terminal device 14 of a second user by means of the first communication terminal device 12 (Step S1). The second user is already in a call or rejects the call or does not answer the call or cannot be reached or has activated a redirect to the voice mail server. So, the call is redirected to the voice mail server 16 of the second user within the telecommunication network system 10 (step S2).

When the call of the first user is redirected to the voice mail server 16, which implements the Voice Mail HD, as soon as a voice Connection Switched CS communication is established between the first communication terminal device 12 and the voice mail server 16, the server 16 will emit a pre-determined DTMF (Dual Tone - Multi Frequency) tone or sequence of DTMF tones to signal that it is an HD server (step S3). It will be relatively easy to come to an agreement as to which pre-determined DTMF tone or sequence of DTMF tones signals that the voice mail server 16 is a Voice Mail HD server. (Alternatively, the DTMF tone or sequence of DTMF tones may be emitted right after the welcome message in replacement of the usual single beep, but this may require some changes in the following scenario as described below.)

If the first communication terminal device 12 is a device which is not equipped with Voice Mail HD function, then this device 12 will simply ignore these tones and proceed with the usual method of audio CS voice mail recording (backwards compatibility).

However, if the first communication terminal device 12 is a device, which is especially equipped to support the Voice Mail HD function described in the proposed patent, i.e., sufficient CPU power and available memory and the required software, then the communication terminal device 12 will immediately detect the tones and know it can perform a Voice Mail HD recording. This recording will consequently work as follows:
- The communication terminal device 12 maintains the circuit switched (CS) connection and let the voice mail server 16 play the welcome message of the user of the second communication terminal device 14 until the "beep" that indicates that the user of the first communication terminal device 12 can start speaking to record the message.
- At this point, the communication terminal device 12 decouples the user and user message recording from the CS connection, while maintaining the CS connection.
- The user of the communication terminal device 12 starts recording the voice message, but this recording takes place locally on the communication terminal device 12, using a preferred standard codec and with optimum recording ability and settings (Step S4).
- At the same time, instead of relaying the user message recording onto the CS connection, the communication terminal device 12 keeps the audio recording decoupled from the audio CS connection. The communication terminal device 12 emits on the audio CS connection a pre-determined sequence of DTMF tones to signal that the handset is HD capable. These tones remain inaudible to the user of the communication terminal device 12 while recording the message, but are -however- received by the voice mail server 16. At this point the server 16 is also aware that the communication terminal device 12 is HD capable. The server 16 then emits a series of DTMF tones (or alternatively other signaling or messaging) that include both, a reference number to provide to the communication terminal device 12 the coordinates of a PS connection-enabled voice mail server able to receive voice mail recordings through a PS connection, as well as a second reference number that refers to the voice mail box to which the communication terminal device 12 will have to send the recording once ready. While that second number may simply be the phone number of the second communication terminal device 14 , it can also be a more compact and short-lived reference number, in order to make the DTMF signaling exchange shorter and more efficient and possibly leave room to add redundant DTMF codes for error correction purpose. In addition the second reference number may be, or include, a short-lived reference number used for security reasons to reduce the risk of denial of service attacks on the voice mail server. At this point the first communication terminal device 12 has the necessary information to deliver the voice mail HD recording as soon as the user of this device 12 has finished recording it and so the CS connection can be disconnected.
- Now the user of the first communication terminal device 12 is in all likelihood still recording its message (as previous step is supposed to only take a few seconds). As soon as said user has finished recording the message, he/she can simply hook on, or press the pound sign (#) on the communication terminal device 12 to ask for additional services. The application of communication terminal device 12 can then simulate traditional voice mail server interactivity by means of audio announcements and menu choices and propose to replay the message, or re-record it, or add special delivery attributes such as urgent delivery, deferred delivery, abort voice mail, etc. Note also here that since this voice mail server simulation uses pre-recorded voice messages on the communication terminal device 12 to provide instructions to the user, the user may be able to configure the voice delivering these instructions by downloading alternative voices, including voices from e.g. preferred celebrities.
- As soon as the user of communication terminal device 12 is done with recording the message he/she can close the connection (e.g. hook on the phone). At this point, the communication terminal device 12 will establish a PS connection to the server 16 at the coordinates indicated previously, and start by signaling the reference number to indicate the identity of the voice mail box to which this recording needs to be delivered. This can be an ID like a phone number or a shorter and temporary reference number. The first communication terminal device 12 will deliver the recording over the PS connection with perfect delivery and independently of eventual network congestion to the voice mail server 16 (step S5). If the network is congested, the message will simply take more time to deliver, as this delivery does not require real-time communication.

For backward compatibility if the voice mail server 16 does not support HD recording then the special DTMF tone(s) will not be played and a communication terminal device 12 will simply proceed with a normal voice mail recording over a CS connection.
- At the receiving side, the voice mail server 16 can now deliver the voice message to the second communication terminal device 14. It is to be noted that at this point the quality of the voice mail recording is HD, i.e., a recording quality that was not impacted by network congestion problems. Now the voice mail server 16 will -as usual- send an SMS to the second communication terminal device 14 to indicate that there is a voice mail waiting at the server 16 (step S6). Since this is an HD recording, the SMS will include additional information that indicates, for example "HD recording" and a reference number to allow a data delivery of the data files (voice mail message recording).
- If the second communication terminal device 12 is Voice Mail HD capable, then the device 14 is able to interpret the additional information that is appended to the SMS message (additional to the usual "there is a message waiting"). This additional information enables the high end phone to establish a PS connection with the HD voice mail server 16 to download the voice recording fully through the PS connection (step S7). This can take place automatically if the settings of the communication terminal device 14 allow this, either as a background task while the user is doing something else with the device 14, or when the user is not using the device 14. This way when the user is ready to listen to the voice mail recordings then a number of these messages are already available in HD quality directly on the communication terminal device 14. It is up to the applications on the handset to provide a smooth user experience, i.e., to integrate the user experience of listening to messages stored on the communication terminal device 14 and messages eventually still residing on the voice mail server. Eventually all messages (HD and non-HD) may be downloaded by such handset over a PS connection. Note that the application or voice mail server 16 should indicate when the played message is an HD recording.

If the user of a high-end communication terminal device 14 has not activated the automatic download then that user is still able to call the voice mail server 16 directly with a CS voice connection to listen to voice mail messages like any other device.
- On the other hand, if the second communication terminal device 12 is a low-end device or does not support voice mail HD then this SMS will not be processed by any special application. The user of the second communication terminal device will simply notice the SMS and consequently call the voice mail server 16. At this point, and although the user of the second communication terminal device 12 has a lower end handset, said user is able to listen through the CS voice connection to a high quality voice recording (step S7'). Hence, if the sound is bad then the user can move until signal strength is better or listen again to the voice mail when there is less congestion in the network 10. This way even a user with an ordinary communication terminal device 14 is already able to benefit from the HD voice mail recording and should be able at one point to listen to the recording with high definition (HD) quality or in any case with improved quality as compared to voice mail recordings that are not high definition (HD) recordings. Note that the voice mail server 16 may indicate via audio announcement to the user that the recording is of high quality.

Note that the exchange of DTMF sequences may not be entirely reliable over an audio CS connection over a congested mobile air interface. To solve this, redundant DTMF tones may be used for error correction purpose or other solutions may be envisaged such as alternative communication methods such as via signaling or messaging.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A method for providing a voice mail message within a telecommunication network system (10), wherein the voice mail message is created by means of a first communication terminal device (12) and is provided on a voice mail server (16) for retrieval by the first and/or a second communication terminal device (12, 14), wherein
- at least one data file of the voice mail message is created locally in the first communication terminal device (12) (S4) and
- the data file is transmitted by use of packet switched (PS) data transmission over the telecommunications network (10) from the first communication terminal device (12) to the voice mail server (16) (S5).

2. The method according to claim 1, wherein the data file is created by
- recording the voice mail message and
- converting the corresponding audio recording into said data file locally within the first communication terminal device (12).

3. The method according to claim 1 or 2, wherein the telecommunications network system (10) enables circuit switched (CS) and packet switched (PS) communication links between at least one of the communication terminal devices (12, 14) and the voice mail server (16).

4. The method according to any one of claims 1 to 3, wherein the first communication terminal device (12) and the voice mail server (16) check whether the respective other device (16, 12) is set up for a transmission of the voice mail message via packet switched (PS) data transmission, wherein the check is performed by comparing their characteristics via data exchange prior the creation of the at least one data file.

5. The method according to any one of claims 1 to 4, wherein the communication terminal device (12, 14) retrieves the voice mail message from the voice mail server (16) by transmission of the data file from the voice mail server (16) to the communication terminal device (12, 14) by use of packet switched (PS) data transmission over the telecommunications network system (10) (S6).

6. The method according to any one of the preceding claims, wherein the voice mail server (16) and the communication terminal device (12, 14) check whether the server (16) and the terminal device (12, 14) are set up for a transmission of the at least one data file via packet switched data transmission, wherein the check is performed by comparing their characteristics via data exchange prior the retrieval of the at least one data file.

7. The method according to claim 6, wherein the communication terminal device (12, 14) retrieves the voice mail message from the voice mail server (16) by means of circuit switched (CS) data transmission in the event that one of the terminal and the server is not set up for a transmission of the voice mail message via packet switched data transmission.

8. A communication terminal device (12, 14) for creating a voice mail message, which is providable on a voice mail server (16), wherein the communication terminal device (12, 14) is arranged for
- creating at least one data file of the voice mail message locally in the communication terminal device (12, 14) and for
- transmitting the at least one data file by use of packet switched data transmission over the telecommunications network (10) to the voice mail server (16).

9. The communication terminal device according to claim 8, wherein the device (12, 14) is a communication terminal device arranged for performing the method according to any one of claims 1 to 7.

10. The communication terminal device according to claim 8 or 9, wherein the device (12, 14) is arranged for receiving and providing the voice mail message in terms of at least one data file transmitted by use of packet switched data transmission over the telecommunications network (10).

11. The communication terminal device according to one of claims 8 to 10, wherein the communication terminal device (12, 14) is arranged for checking whether the voice mail server (16) is set up for a sending and/or receiving of the voice mail message via packet switched data transmission.

12. A voice mail server (16) for receiving voice mail messages from communication terminal devices (12, 14) and for providing voice mail messages to communication terminal devices (12, 14) in a telecommunication network system (10), wherein the voice mail server (16) is arranged for receiving and providing the voice mail message in terms of at least one data file transmitted by use of packet switched data transmission over the telecommunications network (10).

13. The voice mail server according to claim 12, wherein the server (16) is a voice mail server arranged for performing the method according to any one of claims 1 to 7.

14. The voice mail server according to claim 12 or 13, wherein the voice mail server (16) is arranged for checking whether the communication terminal devices (12, 14) is set up for a transmission of the at least one data file via packet switched (PS) data transmission.
